# EUROPEAN PATENT APPLICATION

(11) **EP 4 773 090 A1**
(43) Date of publication of application: **08.07.2026**
(21) Application number: 25183207.7
(22) Date of filing: 17.06.2025
(51) Int. Cl.: G06V 10/24, G06V 20/00, G06V 10/44

(54) **SYSTEMS AND METHOD FOR CHECK ALIGNMENT AND X-RAY VISUALIZATION**

(30) Priority: 03.01.2025 EP 25382002
(71) Applicant: Mitek Systems, Inc., San Diego, CA 92101 (US)
(72) Inventor: CAÑERO, Cristina, Sant Cugat del Vallès (ES); ABBOTT, Derek, San Diego (US); ANISIMOV, Valery, Paris (FR); FERNÁNDEZ, Alberto, Gijón (ES); ALFARO, Maria, Alicante (ES); LUZGANOV, Stanislav, Barcelona (ES)
(74) Representative: Barker Brettell LLP

(57) **Abstract**

A method comprising using at least one hardware processor to: crop a check image using edges of the check in the image; detect semantic elements on the images of the check; use keypoints as the locations obtained from these "stable" regions; match the keypoints of the test check to the keypoints of the reference check by semantic; use obtained homography to further obtain more matching keypoint pairs for ambiguous cases when multiple instances of a given semantic field are found; when the homography is not degenerated, then use the obtained homography to unwarp the reference or the test image to match the same positions for image comparison or to transform the coordinates from reference to test image for a precise comparison and fraud detection; and when the homography is degenerated, then the compute homography to match the check corners, then use the computed homography to unwarp the reference or the test image to match the same positions for image comparison or to transform the coordinates from reference to test image for a precise comparison and fraud detection.

## Description

### BACKGROUND

### Field of the Invention

The embodiments described herein are generally directed to methods to solve a problem when comparing check images captured during a mobile deposit operation.

### Description of the Related Art

Mobile deposit of checks, where a check is imaged sign a mobile device and then the image is routed to the user's bank for deposit into their account. The elements of the check are then analyzed against a reference check(s) to ensure that the check is valid and not fraudulent. Accordingly, conventional banking systems that are configured to process electronic images of checks now typically incorporate a database that stores Check Identity Records (CIRs). Information from a user's check images are extracted and stored in the CIR, known also as a check profile. Such information can include:

### Detectors

| **Test Name** | **Compare Location** | **Compare Contents** | **Brief Description** |
|---|---|---|---|
| Courtesy Amount Field | x | | Compares the location of the CAR field to established profile Values |
| Courtesy Sign | x | Image Comparison | Compares the location and Image of the Courtesy Amount Sign to established profile Values |
| Legal Amount Field | x | | Compares the location of the LAR field to established profile Values |
| Payee Name Field | x | | Compares the location of the Payee Name field to established profile Values |
| TO THE ORDER OF keyword | x | Image Comparison | Compares the location and snippet of keyword PAY TO THE ORDER OF field to established profile Values |
| Date Field | x | | Compares the location of the Date field to established profile Values |
| Date Keyword | x | Image Comparison | Compares the location and pre-printed the keyword Date to established profile Values |
| Payor Address Block | x | | Compares the location of the Payor address block to established profile Values |
| Check Number Field | x | | Compares the location of the Check Number field to established profile Values |
| Reduced Image of Whole Check | | Image Comparison | Reduces the size of the overall check image and compares the overall image to established profile Values |
| Structural Layout | x | | Compares the relative location of pre-printed lines on the checks vs overall established profile Values |
| Comparison of Check Numbers | | | Compares the check number in the bottom code line to the check number on the top right comer of the check |
| LAR Handwriting Style | | Style Comparison | Compares the LAR Handwriting style of the check to established profile Values for certain characters |
| Payor Name | | Image Comparison | Compares the snippet of Payor Name to established profile Values |
| Signature Detection | | Image Comparison | Compares the Payer Signature on the front of the check to established profile Values |
| MICR Line | x | | Compares the location of the MICR line to established profile Values |
| CAR/LAR Difference | | | Compares the CAR value and the LAR value on the check to see if they match |
| Payee Name Handwriting Style | | Style Comparison | Compares the Payee name handwriting style on the check to established profile Values |

The problem with conventional CIR approaches is that the CIR is static and therefore the confidence of the fraud detection is compromised over time.

Other issues with conventional check fraud detection systems include: Image quality and that can be a risk to the ability to produce the best possible results. Such systems are able to detect image quality and determine based on quality conditions that may impact the ability to detect fraud and ensure these items get scored but do not get included into a CIR if check images are too light, too dark, skewed, or have some level of redaction, the results will most likely be degraded, especially for data extraction. Low image resolution, below 200 Dot Per Inch (DPI) would be risk to a software's ability to read it. There can also be image comparison risks. For the image comparison, it can be beneficial for the CIR to contain at least 5 images before fraud scores are incorporated into fraud alerting processes. Profiles with at least 10 images perform even better and will usually generate fewer false positives. For accounts with multiple check stock patterns, it can be preferable that the account profile contain a representative sample of each unique check pattern.

A check contains many elements that must be reviewed and compared with the reference check to identify fraud. As illustrated in FIG. 3, some of the elements are part of the "check stock," that is, fixed elements part of the original design of the check, e.g., titles, signature lines, decorative borders, and others; however, others are specific to each check, such as the legal amount and the payee, as they are added when filling out the check, either in handwriting or printing. Others may change the value but maintain a consistent position, like MICR or Check Number.

When a new check is processed for deposit, it can be compared with images of previously deposited checks for the related account that didn't present fraud and hence are considered as a legit reference. The system can, e.g., compare the handwritten style, the signature, the printed text font type, the title images, and the location of fields and graphical elements on the check: payee name, "pay to the order of" title, dollar sign, MICR field, and many others. If those elements' positions do not match any reference check, the probability of fraud is high.

The challenge for conventional systems is that the different acquisition modalities, such as a check scanner, a phone camera, an ATM, or a flatbed scanner, introduce distortions in the position of the elements on the image, such as translation, rotation, and even perspective effects. Although most image capture pipelines include mechanisms to compensate for these distortions by detecting the external edges of the check paper, in practice, the check localization result needs to be more accurate, and the remaining distortions jeopardize the distinction between location differences due to acquisition distortion and location differences due to a forged or counterfeit payment document.

### SUMMARY

Accordingly, systems, methods, and non-transitory computer-readable media are disclosed to solve a problem when comparing check images captured during a mobile deposit operation.

In an embodiment, a method comprises using at least one hardware processor to: crop a check image using edges of the check in the image; detect semantic elements on the images of the check; use keypoints as the locations obtained from these "stable" regions; match the keypoints of the test check to the keypoints of the reference check by semantic; use obtained homography to further obtain more matching keypoint pairs for ambiguous cases when multiple instances of a given semantic field are found; when the homography is not degenerated, then use the obtained homography to unwarp the reference or the test image to match the same positions for image comparison or to transform the coordinates from reference to test image for a precise comparison and fraud detection; and when the homography is degenerated, then the compute homography to match the check corners, then use the computed homography to unwarp the reference or the test image to match the same positions for image comparison or to transform the coordinates from reference to test image for a precise comparison and fraud detection.

It should be understood that any of the features in the methods above may be implemented individually or with any subset of the other features in any combination. Thus, to the extent that the appended claims would suggest particular dependencies between features, disclosed embodiments are not limited to these particular dependencies. Rather, any of the features described herein may be combined with any other feature described herein, or implemented without any one or more other features described herein, in any combination of features whatsoever. In addition, any of the methods, described above and elsewhere herein, may be embodied, individually or in any combination, in executable software modules of a processor-based system, such as a server, and/or in executable instructions stored in a non-transitory computer-readable medium.

### BRIEF DESCRIPTION OF THE DRAWINGS

The details of the present invention, both as to its structure and operation, may be gleaned in part by study of the accompanying drawings, in which like reference numerals refer to like parts, and in which:
FIG. 1 illustrates an example infrastructure, in which one or more of the processes described herein may be implemented, according to an embodiment;
FIG. 2 illustrates an example processing system, by which one or more of the processes described herein may be executed, according to an embodiment;
FIG. 3 illustrates how checks contain many elements that must be reviewed and compared with the reference check to identify fraud, according to an embodiment;
FIGs. 4A and 4B and FIGs 5A and 5B illustrate the importance of alignment on the ability to detect fraud while preventing false alarms;
FIG. 6 illustrates a process to align to cheques for fraud detection, in accordance with one example embodiment;
FIGs. 7A-D and FIGs. 8A-D illustrate x-ray visualization of check images using the process of FIG. 9; and
FIG. 9 illustrates a process for x-ray visualization of check images, according to an embodiment.

### DETAILED DESCRIPTION

In an embodiment, systems, methods, and non-transitory computer-readable media are disclosed for solving a problem when comparing check images captured during a mobile deposit operation.

After reading this description, it will become apparent to one skilled in the art how to implement the systems and methods described herein in various alternative embodiments and alternative applications. However, although various embodiments will be described herein, it is understood that these embodiments are presented by way of example and illustration only, and not limitation. As such, this detailed description of various embodiments should not be construed to limit the scope or breadth of the systems and methods as set forth in the appended claims.

### 1. System Overview

### 1.1. Infrastructure

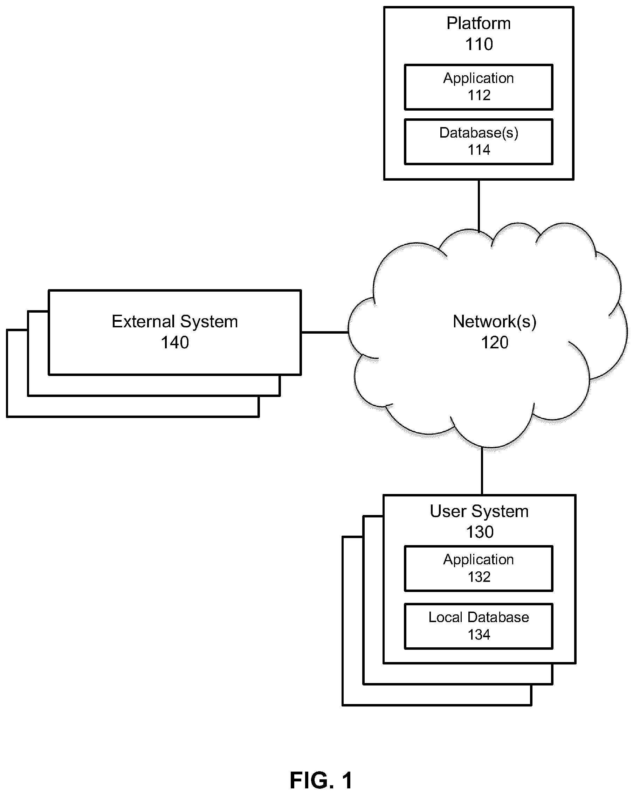

FIG. 1 illustrates an example infrastructure in which one or more of the disclosed processes may be implemented, according to an embodiment. The infrastructure may comprise a platform 110 (e.g., one or more servers) which hosts and/or executes one or more of the various processes (e.g., methods or functions, implemented as software modules) described herein. Platform 110 may comprise dedicated servers, or may instead be implemented in a computing cloud, in which the resources of one or more servers are dynamically and elastically allocated to multiple tenants based on demand. In either case, the servers may be collocated and/or geographically distributed. Platform 110 may also comprise or be communicatively connected to a server application 112 and/or one or more databases 114. In addition, platform 110 may be communicatively connected to one or more user systems 130 via one or more networks 120. Platform 110 may also be communicatively connected to one or more external systems 140 (e.g., other platforms, websites, etc.) via one or more networks 120.

Network(s) 120 may comprise the Internet, and platform 110 may communicate with user system(s) 130 through the Internet using standard transmission protocols, such as HyperText Transfer Protocol (HTTP), HTTP Secure (HTTPS), File Transfer Protocol (FTP), FTP Secure (FTPS), Secure Shell FTP (SFTP), and the like, as well as proprietary protocols. While platform 110 is illustrated as being connected to various systems through a single set of network(s) 120, it should be understood that platform 110 may be connected to the various systems via different sets of one or more networks. For example, platform 110 may be connected to a subset of user systems 130 and/or external systems 140 via the Internet, but may be connected to one or more other user systems 130 and/or external systems 140 via an intranet. Furthermore, while only a few user systems 130 and external systems 140, one server application 112, and one set of database(s) 114 are illustrated, it should be understood that the infrastructure may comprise any number of user systems, external systems, server applications, and databases.

User system(s) 130 may comprise any type or types of computing devices capable of wired and/or wireless communication, including without limitation, desktop computers, laptop computers, tablet computers, smart phones or other mobile phones, servers, game consoles, televisions, set-top boxes, electronic kiosks, point-of-sale terminals, and/or the like. Each user system 130 may comprise or be communicatively connected to a client application 132 and/or one or more local databases 134.

Platform 110 may comprise web servers which host one or more websites and/or web services. In embodiments in which a website is provided, the website may comprise a graphical user interface, including, for example, one or more screens (e.g., webpages) generated in HyperText Markup Language (HTML) or other language. Platform 110 transmits or serves one or more screens of the graphical user interface in response to requests from user system(s) 130. In some embodiments, these screens may be served in the form of a wizard, in which case two or more screens may be served in a sequential manner, and one or more of the sequential screens may depend on an interaction of the user or user system 130 with one or more preceding screens. The requests to platform 110 and the responses from platform 110, including the screens of the graphical user interface, may both be communicated through network(s) 120, which may include the Internet, using standard communication protocols (e.g., HTTP, HTTPS, etc.). These screens (e.g., webpages) may comprise a combination of content and elements, such as text, images, videos, animations, references (e.g., hyperlinks), frames, inputs (e.g., textboxes, text areas, checkboxes, radio buttons, drop-down menus, buttons, forms, etc.), scripts (e.g., JavaScript), and the like, including elements comprising or derived from data stored in one or more databases (e.g., database(s) 114) that are locally and/or remotely accessible to platform 110. It should be understood that platform 110 may also respond to other requests from user system(s) 130.

Platform 110 may comprise, be communicatively coupled with, or otherwise have access to one or more database(s) 114. For example, platform 110 may comprise one or more database servers which manage one or more databases 114. Server application 112 executing on platform 110 and/or client application 132 executing on user system 130 may submit data (e.g., user data, form data, etc.) to be stored in database(s) 114, and/or request access to data stored in database(s) 114. Any suitable database may be utilized, including without limitation MySQL^{™}, Oracle^{™}, IBM^{™}, Microsoft SQL^{™}, Access^{™}, PostgreSQL^{™}, MongoDB^{™}, and the like, including cloud-based databases and proprietary databases. Data may be sent to platform 110, for instance, using the well-known POST request supported by HTTP, via FTP, and/or the like. This data, as well as other requests, may be handled, for example, by server-side web technology, such as a servlet or other software module (e.g., comprised in server application 112), executed by platform 110.

In embodiments in which a web service is provided, platform 110 may receive requests from user system(s) 130 and/or external system(s) 140, and provide responses in eXtensible Markup Language (XML), JavaScript Object Notation (JSON), and/or any other suitable or desired format. In such embodiments, platform 110 may provide an application programming interface (API) which defines the manner in which user system(s) 130 and/or external system(s) 140 may interact with the web service. Thus, user system(s) 130 and/or external system(s) 140 (which may themselves be servers), can define their own user interfaces, and rely on the web service to implement or otherwise provide the backend processes (e.g., methods and functionality), storage, and/or the like, described herein. For example, in such an embodiment, a client application 132, executing on one or more user system(s) 130, may interact with a server application 112 executing on platform 110 to execute one or more or a portion of one or more of the various process(es) described herein.

Client application 132 may be "thin," in which case processing is primarily carried out server-side by server application 112 on platform 110. A basic example of a thin client application 132 is a browser application, which simply requests, receives, and renders webpages at user system(s) 130, while server application 112 on platform 110 is responsible for generating the webpages and managing database functions. Alternatively, the client application may be "thick," in which case processing is primarily carried out client-side by user system(s) 130. It should be understood that client application 132 may perform an amount of processing, relative to server application 112 on platform 110, at any point along this spectrum between "thin" and "thick," depending on the design goals of the particular implementation. In any case, the software described herein, which may wholly reside on either platform 110 (e.g., in which case server application 112 performs all processing) or user system(s) 130 (e.g., in which case client application 132 performs all processing) or be distributed between platform 110 and user system(s) 130 (e.g., in which case server application 112 and client application 132 both perform processing), can comprise one or more executable software modules comprising instructions that implement one or more of the processes (e.g., methods or functions) described herein.

### 1.2. Example Processing Device

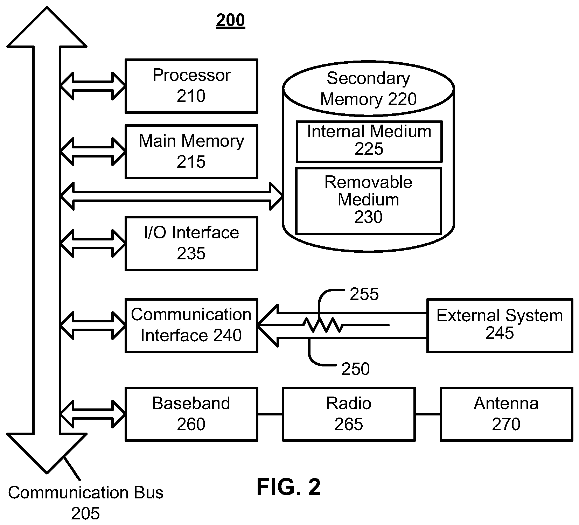

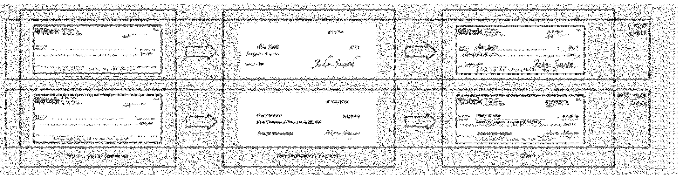

FIG. 2 is a block diagram illustrating an example wired or wireless system 200 that may be used in connection with various embodiments described herein. For example, system 200 may be used as or in conjunction with one or more of the processes (e.g., to store and/or execute the software), including any methods or functions, described herein, and may represent components of platform 110, user system(s) 130, external system(s) 140, and/or other processing devices described herein. System 200 can be any processor-enabled device (e.g., server, personal computer, etc.) that is capable of wired or wireless data communication. Other processing systems and/or architectures may also be used, as will be clear to those skilled in the art.

System 200 may comprise one or more processors 210. Processor(s) 210 may comprise a central processing unit (CPU). Additional processors may be provided, such as a graphics processing unit (GPU), an auxiliary processor to manage input/output, an auxiliary processor to perform floating-point mathematical operations, a special-purpose microprocessor having an architecture suitable for fast execution of signal-processing algorithms (e.g., digital-signal processor), a subordinate processor (e.g., back-end processor), an additional microprocessor or controller for dual or multiple processor systems, and/or a coprocessor. Such auxiliary processors may be discrete processors or may be integrated with a main processor 210. Examples of processors which may be used with system 200 include, without limitation, any of the processors (e.g., Pentium^{™}, Core i7^{™}, Core 19^{™}, Xeon^{™}, etc.) available from Intel Corporation of Santa Clara, California, any of the processors available from Advanced Micro Devices, Incorporated (AMD) of Santa Clara, California, any of the processors (e.g., A series, M series, etc.) available from Apple Inc. of Cupertino, any of the processors (e.g., Exynos^{™}) available from Samsung Electronics Co., Ltd., of Seoul, South Korea, any of the processors available from NXP Semiconductors N.V. of Eindhoven, Netherlands, and/or the like.

Processor(s) 210 may be connected to a communication bus 205. Communication bus 205 may include a data channel for facilitating information transfer between storage and other peripheral components of system 200. Furthermore, communication bus 205 may provide a set of signals used for communication with processor 210, including a data bus, address bus, and/or control bus (not shown). Communication bus 205 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, standards promulgated by the Institute of Electrical and Electronics Engineers (IEEE) including IEEE 488 general-purpose interface bus (GPIB), IEEE 696/S-100, and/or the like.

System 200 may comprise main memory 215. Main memory 215 provides storage of instructions and data for programs executing on processor 210, such as any of the software discussed herein. It should be understood that programs stored in the memory and executed by processor 210 may be written and/or compiled according to any suitable language, including without limitation C/C++, Java, JavaScript, Perl, Python, Visual Basic, .NET, and the like. Main memory 215 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

System 200 may comprise secondary memory 220. Secondary memory 220 is a non-transitory computer-readable medium having computer-executable code and/or other data (e.g., any of the software disclosed herein) stored thereon. In this description, the term "computer-readable medium" is used to refer to any non-transitory computer-readable storage media used to provide computer-executable code and/or other data to or within system 200. The computer software stored on secondary memory 220 is read into main memory 215 for execution by processor 210. Secondary memory 220 may include, for example, semiconductor-based memory, such as programmable read-only memory (PROM), erasable programmable read-only memory (EPROM), electrically erasable read-only memory (EEPROM), and flash memory (block-oriented memory similar to EEPROM).

Secondary memory 220 may include an internal medium 225 and/or a removable medium 230. Internal medium 225 and removable medium 230 are read from and/or written to in any well-known manner. Internal medium 225 may comprise one or more hard disk drives, solid state drives, and/or the like. Removable storage medium 230 may be, for example, a magnetic tape drive, a compact disc (CD) drive, a digital versatile disc (DVD) drive, other optical drive, a flash memory drive, and/or the like.

System 200 may comprise an input/output (I/O) interface 235. I/O interface 235 provides an interface between one or more components of system 200 and one or more input and/or output devices. Example input devices include, without limitation, sensors, keyboards, touch screens or other touch-sensitive devices, cameras, biometric sensing devices, computer mice, trackballs, pen-based pointing devices, and/or the like. Examples of output devices include, without limitation, other processing systems, cathode ray tubes (CRTs), plasma displays, light-emitting diode (LED) displays, liquid crystal displays (LCDs), printers, vacuum fluorescent displays (VFDs), surface-conduction electron-emitter displays (SEDs), field emission displays (FEDs), and/or the like. In some cases, an input and output device may be combined, such as in the case of a touch panel display (e.g., in a smartphone, tablet computer, or other mobile device).

System 200 may comprise a communication interface 240. Communication interface 240 allows software to be transferred between system 200 and external devices (e.g. printers), networks, or other information sources. For example, computer-executable code and/or data may be transferred to system 200 from a network server (e.g., platform 110) via communication interface 240. Examples of communication interface 240 include a built-in network adapter, network interface card (NIC), Personal Computer Memory Card International Association (PCMCIA) network card, card bus network adapter, wireless network adapter, Universal Serial Bus (USB) network adapter, modem, a wireless data card, a communications port, an infrared interface, an IEEE 1394 fire-wire, and any other device capable of interfacing system 200 with a network (e.g., network(s) 120) or another computing device. Communication interface 240 preferably implements industry-promulgated protocol standards, such as Ethernet IEEE 802 standards, Fiber Channel, digital subscriber line (DSL), asynchronous digital subscriber line (ADSL), frame relay, asynchronous transfer mode (ATM), integrated digital services network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Software transferred via communication interface 240 is generally in the form of electrical communication signals 255. These signals 255 may be provided to communication interface 240 via a communication channel 250 between communication interface 240 and an external system 245 (e.g., which may correspond to an external system 140, an external computer-readable medium, and/or the like). In an embodiment, communication channel 250 may be a wired or wireless network (e.g., network(s) 120), or any variety of other communication links. Communication channel 250 carries signals 255 and can be implemented using a variety of wired or wireless communication means including wire or cable, fiber optics, conventional phone line, cellular phone link, wireless data communication link, radio frequency ("RF") link, or infrared link, just to name a few.

Computer-executable code is stored in main memory 215 and/or secondary memory 220. Computer-executable code can also be received from an external system 245 via communication interface 240 and stored in main memory 215 and/or secondary memory 220. Such computer-executable code, when executed, enable system 200 to perform the various process(es) of the disclosed embodiments as described elsewhere herein.

In an embodiment that is implemented using software, the software may be stored on a computer-readable medium and initially loaded into system 200 by way of removable medium 230, I/O interface 235, or communication interface 240. In such an embodiment, the software is loaded into system 200 in the form of electrical communication signals 255. The software, when executed by processor 210, preferably causes processor 210 to perform one or more of the processes described elsewhere herein.

System 200 may comprise wireless communication components that facilitate wireless communication over a voice network and/or a data network (e.g., in the case of user system 130). The wireless communication components comprise an antenna system 270, a radio system 265, and a baseband system 260. In system 200, radio frequency (RF) signals are transmitted and received over the air by antenna system 270 under the management of radio system 265.

In an embodiment, antenna system 270 may comprise one or more antennae and one or more multiplexors (not shown) that perform a switching function to provide antenna system 270 with transmit and receive signal paths. In the receive path, received RF signals can be coupled from a multiplexor to a low noise amplifier (not shown) that amplifies the received RF signal and sends the amplified signal to radio system 265.

In an alternative embodiment, radio system 265 may comprise one or more radios that are configured to communicate over various frequencies. In an embodiment, radio system 265 may combine a demodulator (not shown) and modulator (not shown) in one integrated circuit (IC). The demodulator and modulator can also be separate components. In the incoming path, the demodulator strips away the RF carrier signal leaving a baseband receive audio signal, which is sent from radio system 265 to baseband system 260.

If the received signal contains audio information, then baseband system 260 decodes the signal and converts it to an analog signal. Then the signal is amplified and sent to a speaker. Baseband system 260 also receives analog audio signals from a microphone. These analog audio signals are converted to digital signals and encoded by baseband system 260. Baseband system 260 also encodes the digital signals for transmission and generates a baseband transmit audio signal that is routed to the modulator portion of radio system 265. The modulator mixes the baseband transmit audio signal with an RF carrier signal, generating an RF transmit signal that is routed to antenna system 270 and may pass through a power amplifier (not shown). The power amplifier amplifies the RF transmit signal and routes it to antenna system 270, where the signal is switched to the antenna port for transmission.

Baseband system 260 is communicatively coupled with processor(s) 210, which have access to memory 215 and 220. Thus, software can be received from baseband processor 260 and stored in main memory 210 or in secondary memory 220, or executed upon receipt. Such software, when executed, can enable system 200 to perform the various process(es) of the disclosed embodiments.

### 2. Process Overview

Embodiments of processes for solving a problem when comparing check images captured during a mobile deposit operation will now be described in detail. It should be understood that the described processes may be embodied in one or more software modules that are executed by one or more hardware processors (e.g., processor 210), for example, as a software application (e.g., server application 112, client application 132, and/or a distributed application comprising both server application 112 and client application 132), which may be executed wholly by processor(s) of platform 110, wholly by processor(s) of user system(s) 130, or may be distributed across platform 110 and user system(s) 130, such that some portions or modules of the software application are executed by platform 110 and other portions or modules of the software application are executed by user system(s) 130. The described processes may be implemented as instructions represented in source code, object code, and/or machine code. These instructions may be executed directly by hardware processor(s) 210, or alternatively, may be executed by a virtual machine operating between the object code and hardware processor(s) 210. In addition, the disclosed software may be built upon or interfaced with one or more existing systems.

Alternatively, the described processes may be implemented as a hardware component (e.g., general-purpose processor, integrated circuit (IC), application-specific integrated circuit (ASIC), digital signal processor (DSP), field-programmable gate array (FPGA) or other programmable logic device, discrete gate or transistor logic, etc.), combination of hardware components, or combination of hardware and software components. To clearly illustrate the interchangeability of hardware and software, various illustrative components, blocks, modules, circuits, and steps are described herein generally in terms of their functionality. Whether such functionality is implemented as hardware or software depends upon the particular application and design constraints imposed on the overall system. Skilled persons can implement the described functionality in varying ways for each particular application, but such implementation decisions should not be interpreted as causing a departure from the scope of the invention. In addition, the grouping of functions within a component, block, module, circuit, or step is for ease of description. Specific functions or steps can be moved from one component, block, module, circuit, or step to another without departing from the invention.

Furthermore, while the processes, described herein, are illustrated with a certain arrangement and ordering of subprocesses, each process may be implemented with fewer, more, or different subprocesses and a different arrangement and/or ordering of subprocesses. In addition, it should be understood that any subprocess, which does not depend on the completion of another subprocess, may be executed before, after, or in parallel with that other independent subprocess, even if the subprocesses are described or illustrated in a particular order.

### 2.1. Method for Check Alignment

The methods described below allow alignment of check images that increases the ability to identify changes on the check stock, or on the position of the fields, even when there are cropping issues on the extracted check images. Differences can then be enhanced for human review, which really shine, making much faster and accurate the review of checks for fraud triaging.

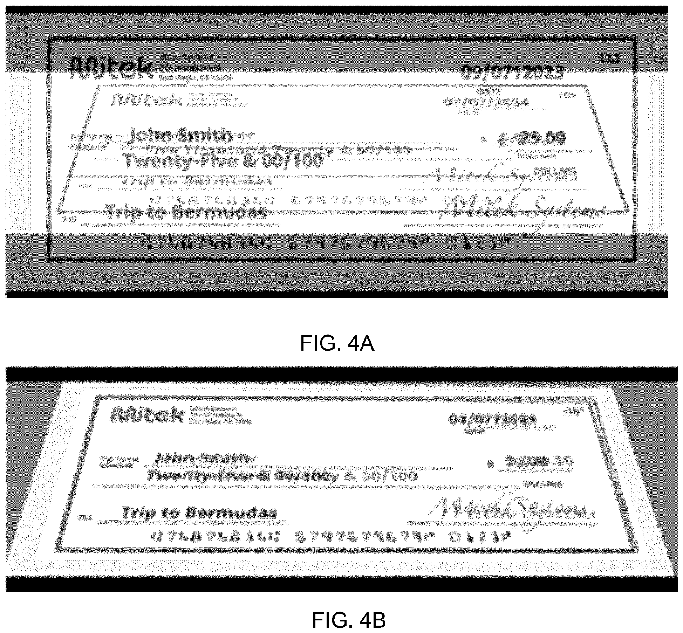

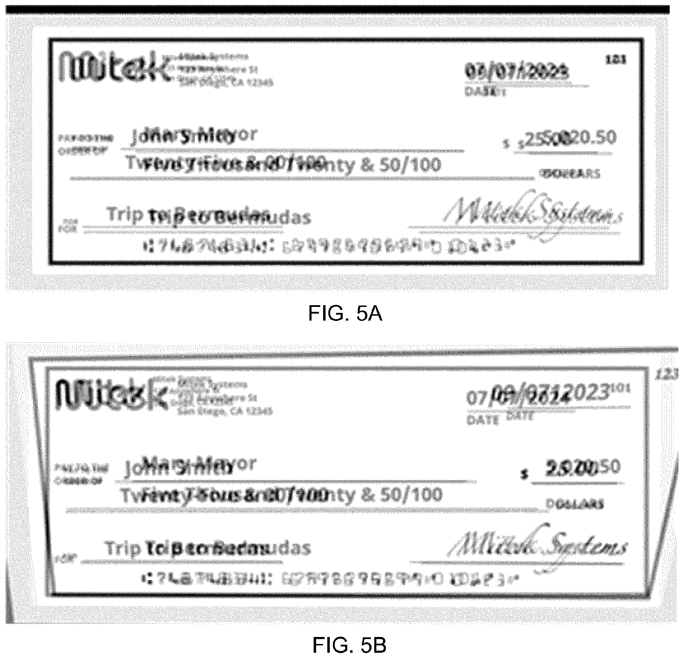

FIGs. 4A and B and FIGs. 5A and B illustrate the importance of this alignment on the ability to detect fraud while preventing false alarms. It must be noted that a standard image alignment would not be useful in the FIGs. 5A and B as the interest is to see differences on check stock and that would hide them.

Existing image alignment techniques will fail in this use-case because there are "false matches" that avoid a precise homography estimation, especially on binarized images. Examples of those false matches are letters part of the payee's name on printed checks, numbers on the MICR etc. While locally they present the same appearance, if matched they will introduce error. Removing text before attempting the local feature detection will not work either, as payment documents are mainly text, especially on binarized images, and an accurate homography estimation needs feature points distributed across all the check areas. Accurate edge detection of the payment document paper by sophisticated algorithms is usually not an option either, as in many cases, the image of the payment document is already binarized and cropped, and hence, the paper edges are not visible. Moreover, for printed payment documents, there may be a displacement between the paper edges and the content, which is what the system focuses on comparing

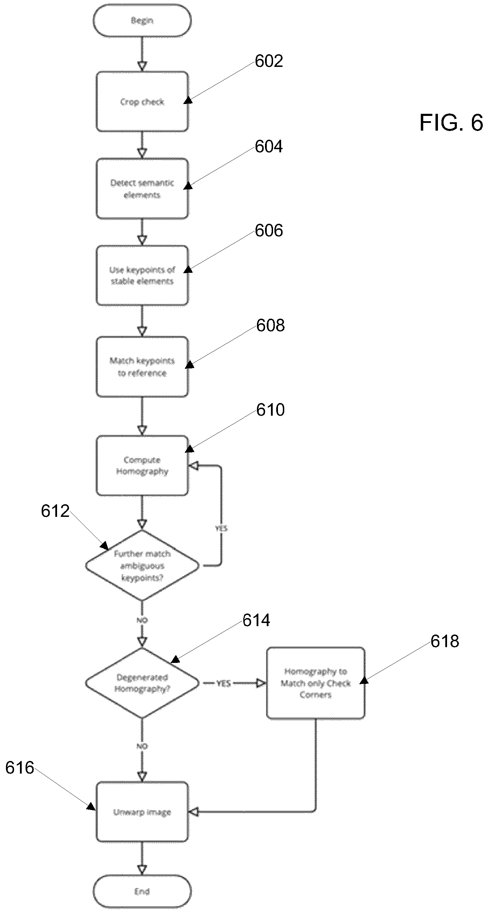

Thus, the method to align to cheques for fraud detection as illustrated in FIG. 6 can be used to overcome some of these deficiencies and issues. First in step 602, the check image can be cropped using edges of the check in the image (this is not accurate but close). Then in step 604, semantic elements on the images of the check are detected. In certain embodiments, the different elements on the images of the check to be compared are detected. Example of those are, but not restricted to: decorative borders, signature line, titles, payor logotype, payor address, security features, holograms, stamps, signature, code line (MICR), memoline and check number. The position of those elements is fixed independently of the personalization of the check because they are part of the "check stock". Hence, they can be used to compute a homography without introducing error in the estimation. This is key, because we have a semantic understanding of what changes from ones check to another, and what does not.

In step 606, keypoints are used as the locations obtained from these "stable" regions. This can be, but not restricted to, the locations of the detected elements, the centroids of those elements, or even local features obtained on those regions in case we know the content is stable (yes for titles, no for MICR).

In step 608, the keypoints of the test check are matched to the keypoints of the reference check by semantic. Then in step 610, these keypoints correspondence are used to obtain an homography by robust estimation methods like RANSAC or MLESAC. Optionally, in step 612, the obtained homography can be used to further obtain more matching keypoint pairs for ambiguous cases when multiple instances of a given semantic field are found, and step 610 can be repeated.

When check stock is very different, the homography will be degenerated, with strong perspective and shear. If the homography is not degenerated, as determined in step 614, then the obtained homography can be used, in step 616 to unwarp the reference or the test image to match the same positions for image comparison or to transform the coordinates from reference to test image for a precise comparison and fraud detection. If the homography is degenerated, then the homography can be computed, in step 618, to just match the check corners, before using the homography in step 616.

One advantage of this method is that the fraud detection system can detect these element positions for each reference check only once when the reference image is added to the check profile and then re-use them for each test image. These positions do not contain Personally Identifiable Information (PII).

### 2.2. X-Ray Visualization

Visual comparison of differences can however be lengthy, and efficiency is critical in this usage scenario. While merging and overlapping a test image with a reference image have been disclosed, which allows tuning the level of transparency between the two images. However, the generated merged image can be confusing and fraud specialists need to review both images by alternating their focus between the check to review and the reference check. Using the alignment method above, the results are much better, but still can be a bit confusing to determine upfront what structures are "new" and what are "missing", so still agents would need to review both images separately.

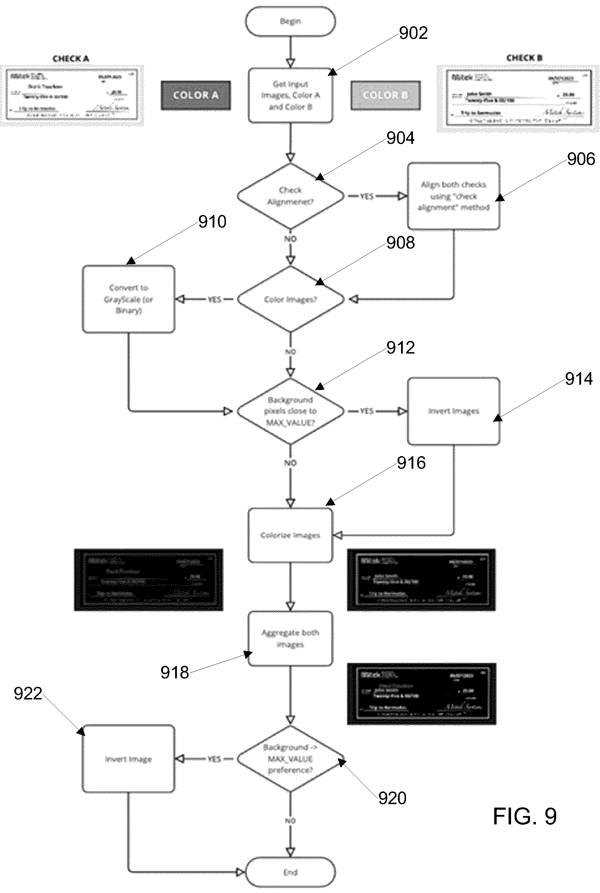

FIG. 9 is a flow chart illustrating an example process for x-ray visualization of check images in accordance with one example embodiment. The target is to enhance the regions that are different, while keeping a good understanding of the content of the check. Also, it is important to know which artifacts are new (and probably shouldn't be there) and which ones are missing (and hence it is a sign of fraud).

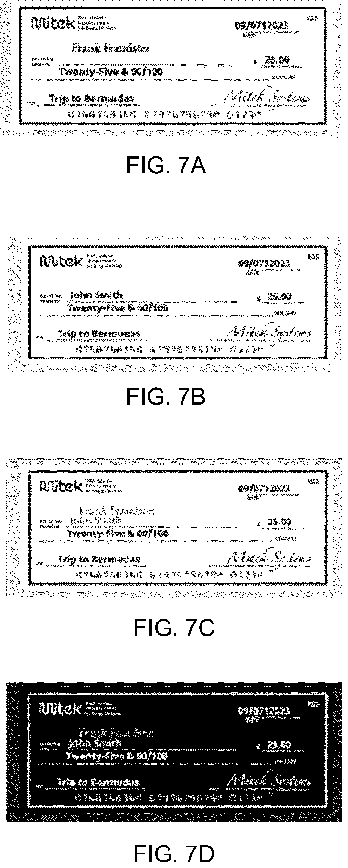

Thus, x-ray visualization allows for better comparison of review check image FIG. 7A vs reference image FIG. 7B. With existing traditional overlap techniques, see FIG 7C, it is difficult to discern what is new and what is missing, while with x-ray visualization FIG. 7D it can be seen that "John Smith" is the missing part, since it is, e.g., blue (or color "B") and "Frank Fraudster" is new in the review check, as it is, e.g., red (or color "A").

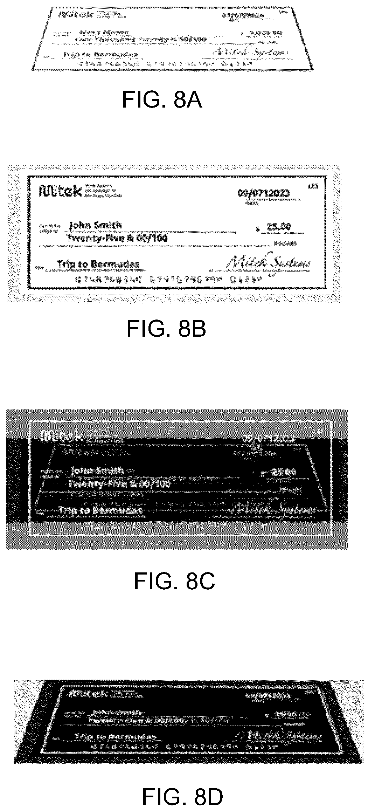

As can be seen in FIGs. 8A-8B, check alignment can dramatically improve the ability to understand differences when using x-ray visualization. The image in FIG. 8C has a lot of visual clutter, but it is very easy to distinguish where are the differences in FIG. 8D.

Referring to FIG. 9, x-ray visualization then consists of defining, in step 902, two RGB triplets for COLOR_A and COLOR_B, ideally ensuring that COLOR_A + COLOR_B = (MAX_VALUE, MAX_VALUE, MAX_VALUE) for better results. Determining if alignment is needed in step 904, and if so, then in step 906 align both images using the check alignment method, which as noted can dramatically improve results. If determined it is necessary in step 908, then in step 910 convert both images to greyscale, and optionally binarize them. If determined necessary in step 912, invert the images in step 914, so check background has a value of 0, while printed elements are should with a value closer to MAX_VALUE.

Then in step 916, colorize each image to COLOR_A and COLOR_B, respectively and in step 918 aggregate pixel-wise both images (like using maximum function, for example). And if determined to be necessary in step 920, invert the images, in step 922, so background is shown with a clear color and printed text with a dark one. However, it is easier to identify differences with a dark background.

The proposed merging method copes with this issue and enhances the speed and accuracy of check comparison against a reference.

The above description of the disclosed embodiments is provided to enable any person skilled in the art to make or use the invention. Various modifications to these embodiments will be readily apparent to those skilled in the art, and the general principles described herein can be applied to other embodiments without departing from the spirit or scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly not limited.

As used herein, the terms "comprising," "comprise," and "comprises" are open-ended. For instance, "A comprises B" means that A may include either: (i) only B; or (ii) B in combination with one or a plurality, and potentially any number, of other components. In contrast, the terms "consisting of," "consist of," and "consists of" are closed-ended. For instance, "A consists of B" means that A only includes B with no other component in the same context.

Combinations, described herein, such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, and any such combination may contain one or more members of its constituents A, B, and/or C. For example, a combination of A and B may comprise one A and multiple B's, multiple A's and one B, or multiple A's and multiple B's.

## Claims

1. A method comprising using at least one hardware processor to:
crop a check image using edges of the check in the image;
detect semantic elements on the images of the check;
use keypoints as the locations obtained from these "stable" regions;
match the keypoints of the test check to the keypoints of the reference check by semantic;
use obtained homography to further obtain more matching keypoint pairs for ambiguous cases when multiple instances of a given semantic field are found;
when the homography is not degenerated, then use the obtained homography to unwarp the reference or the test image to match the same positions for image comparison or to transform the coordinates from reference to test image for a precise comparison and fraud detection; and
when the homography is degenerated, then the compute homography to match the check corners, then use the computed homography to unwarp the reference or the test image to match the same positions for image comparison or to transform the coordinates from reference to test image for a precise comparison and fraud detection.

2. A method comprising using at least one hardware processor to:
define two RGB triplets for COLOR_A and COLOR_B, ideally ensuring that COLOR_A + COLOR_B = (MAX_VALUE, MAX_VALUE, MAX_VALUE);
determine if alignment is needed and if so, then align both images using a check alignment method;
determine if image conversion is necessary, and if so then convert both images to greyscale, and optionally binarize them;
determine if inversion is necessary and if so, then invert the images, so check background has a value of 0, while printed elements are should with a value closer to MAX_VALUE;
colorize each image to COLOR_A and COLOR_B, respectively;
aggregate pixel-wise both images; and if determined to be necessary, invert the images so background is shown with a clear color and printed text with a dark one.

3. The method of claim 2, wherein the check alignment method uses the at least one hardware processor to:
crop a check image using edges of the check in the image;
detect semantic elements on the images of the check;
use keypoints as the locations obtained from these "stable" regions;
match the keypoints of the test check to the keypoints of the reference check by semantic;
use obtained homography to further obtain more matching keypoint pairs for ambiguous cases when multiple instances of a given semantic field are found;
when the homography is not degenerated, then use the obtained homography to unwarp the reference or the test image to match the same positions for image comparison or to transform the coordinates from reference to test image for a precise comparison and fraud detection; and
when the homography is degenerated, then the compute homography to match the check corners, then use the computed homography to unwarp the reference or the test image to match the same positions for image comparison or to transform the coordinates from reference to test image for a precise comparison and fraud detection.
